# EUROPEAN PATENT APPLICATION

(11) **EP 4 694 380 A1**
(43) Date of publication of application: **11.02.2026**
(21) Application number: 24838472.9
(22) Date of filing: 28.05.2024
(51) Int. Cl.: H04W 52/02

(54) **STANDBY METHOD AND ELECTRONIC DEVICE**

(30) Priority: 07.07.2023 CN 202310841845
(71) Applicant: Huawei Technologies Co., Ltd., Shenzhen, Guangdong 518129 (CN)
(72) Inventor: ZHANG, Chunxin, Shenzhen, Guangdong 518129 (CN)
(74) Representative: Isarpatent
(86) International application number: PCT/CN2024/095653
(87) International publication number: WO 2025/011214

(57) **Abstract**

Embodiments of the present invention provide a standby method and an electronic device. In technical solutions provided in embodiments of the present invention, the standby method includes: entering, by an electronic device, a first standby scenario, where the first standby scenario is a scenario in which a first wake lock, when the electronic device executes a first event through a first application, is obtained through requesting based on the first event in response to a screen-off operation of a user; requesting a second wake lock for a second standby scenario based on a second event, where the second standby scenario is a scenario in which the electronic device in a standby state executes the second event through a second application; approving or rejecting a request for the second wake lock based on the first standby scenario, the second standby scenario, and a standby scenario relationship; and entering the standby state after the first wake lock is released and a screen is off, or after both the first wake lock and the second wake lock are released and a screen is off. The wake locks are managed and controlled based on the scenarios, so that the electronic device is controllable and flexible in a scenario of entering the standby state.

## Description

This application claims priority to Chinese Patent Application No. 202310841845.2, field with the China National Intellectual Property Administration on July 7, 2023 and entitled "STANDBY METHOD AND ELECTRONIC DEVICE", which is incorporated herein by reference in its entirety.

### TECHNICAL FIELD

The present invention relates to the field of computer technologies, and in particular, to a standby method and an electronic device.

### BACKGROUND

A feature of an electronic device reducing power consumption by entering a standby state to improve endurance is a power management technology of an operating system. How the electronic device enters the standby state is one of key technical points in the power management technology of the operating system. However, there is usually an uncontrollable or inflexible problem in a scenario in which the electronic device enters the standby state.

### SUMMARY

In view of this, embodiments of the present invention provide a standby method and an electronic device. Wake locks are managed and controlled based on scenarios, so that the electronic device is controllable and flexible in a scenario of entering a standby state.

According to a first aspect, an embodiment of the present invention provides a standby method. The method includes:
entering, by an electronic device, a first standby scenario, where the first standby scenario is a scenario in which a first wake lock, when the electronic device executes a first event through a first application, is obtained through requesting based on the first event in response to a screen-off operation of a user;
requesting a second wake lock for a second standby scenario based on a second event, where the second standby scenario is a scenario in which the electronic device in a standby state executes the second event through a second application;
approving or rejecting a request for the second wake lock based on the first standby scenario, the second standby scenario, and a standby scenario relationship; and
entering the standby state after the first wake lock is released and a screen is off, or after both the first wake lock and the second wake lock are released and a screen is off. The wake locks are managed and controlled based on the standby scenarios, so that the electronic device is controllable and flexible in a scenario of entering the standby state.

With reference to the first aspect, in some implementations of the first aspect, before requesting the second wake lock for the second standby scenario based on the second event, the method further includes:
receiving the second event. When the second event is from the outside, the electronic device needs to receive the second event, such as an incoming call event or a messaging event.

With reference to the first aspect, in some implementations of the first aspect, the first standby scenario includes an audio scenario, an exercise scenario, a navigation scenario, or a task scenario, and the first application includes a music application, an exercise application, a map application, or a browser application. According to the standard of application classification in an application market, types of applications that perform task processing in a standby case are roughly five types: audio and video entertainment, social communication, utility tools, exercise and health, and travel navigation. In an embodiment of the present invention, the five types of applications are classified into six standby scenarios, respectively a notification scenario, a call scenario, an audio scenario, an exercise scenario, a navigation scenario, and a task scenario. In any standby scenario, what needs to be woken up is a part of a system and hardware of the electronic device, to ensure minimization of a wakeup range, so that unnecessary task execution can be effectively reduced, thereby reducing duration of entering a standby state, reducing power consumption, and improving endurance. Therefore, in an embodiment of the present invention, a wake lock is redesigned based on the six standby scenarios. Because the first standby a scenario in which, when the electronic device executes the first event through the first application, the first wake lock is obtained through requesting based on the first event in response to the screen-off operation of the user, and the first event continues to be executed through the first application based on the first wake lock, the audio scenario, the exercise scenario, the navigation scenario, or the task scenario in the foregoing six standby scenarios matches the first standby scenario. The first application corresponds to the first standby scenario. Therefore, the first application includes a music application, an exercise application, a map application, or a browser application. The first event corresponds to the first standby scenario. For example, if the first standby scenario is an audio scenario, the first event is audio playing; or if the first standby scenario is a task scenario, the first event is a download task.

With reference to the first aspect, in some implementations of the first aspect, the second standby scenario includes a notification scenario, a call scenario, an audio scenario, an exercise scenario, a navigation scenario, or a task scenario, and the second application includes a messaging application, a phone application, a music application, an exercise application, a map application, or a browser application. The second standby scenario is a scenario in which the electronic device in the standby state executes the second event through the second application. All the six standby scenarios: the notification scenario, the call scenario, the audio scenario, the exercise scenario, the navigation scenario, and the task scenario, may be used as the second standby scenario. The second application corresponds to the second scenario. Therefore, the second application includes a messaging application, a phone application, a music application, an exercise application, a map application, or a browser application. The second event corresponds to the second standby scenario. For example, if the second standby scenario is an audio scenario, the second event is audio playing; or if the second standby scenario is a task scenario, the second event is a download task.

With reference to the first aspect, in some implementations of the first aspect, the first standby scenario and the second standby scenario are different. When the first standby scenario and the second standby scenario are different, the electronic device determines or rejects a request for a wake lock for the second standby scenario based on a relationship between the two standby scenarios.

With reference to the first aspect, in some implementations of the first aspect, the first application and the second application are different. The first application may be different from the second application.

With reference to the first aspect, in some implementations of the first aspect, the standby scenario relationship includes mutual exclusion between a task scenario and a non-task scenario. A wake lock for a task scenario cannot be activated in any standby scenario. After the electronic device has entered a standby scenario (except for a task scenario), a wake lock for a task scenario cannot be activated. In addition, the electronic device strictly manages and controls execution frequency and duration of the wake lock for the task scenario. Usually, frequent and trivial tasks in the system prevent the electronic device from entering a standby state. In an embodiment of the present invention, the standby scenario relationship of mutual exclusion between a task scenario and another standby scenario is set, so that frequent and trivial tasks in the system can be prevented from preventing the system from entering a standby state.

With reference to the first aspect, in some implementations of the first aspect, the standby scenario relationship further includes mutual exclusion between standby scenarios in which a sleep mode is entered with the screen off from a foreground. There is a mutual exclusion relationship between standby scenarios in which a standby state can be entered from the foreground. For example, in an exercise scenario, the screen of the electronic device is off, and in this case, a wake lock for an audio scenario cannot be activated. However, the audio scenario and the exercise scenario may coexist (for example, when the electronic device wakes up with the screen on, an exercise application and a music application are started to start exercise and music playing at the same time. In this case, wake locks for both the exercise scenario and the audio scenario are activated).

With reference to the first aspect, in some implementations of the first aspect, that the first wake lock is obtained through requesting based on the first standby scenario includes:
requesting the first wake lock from a power service through a system service corresponding to the first event in the first standby scenario; and
approving a request for the first wake lock through the power service based on the first event. The power service of the electronic device releases a background wake lock provided for an application, and no longer allows direct requesting by the application, preventing a third-party application from abusing the wake lock. Based on a standby scenario of the application, a corresponding system service requests a wake lock corresponding to the standby scenario from the power service, thereby ensuring proper use of the wake lock. When the system service and a driver request wake locks, if a standby scenario relationship is improper, the requests fail, ensuring that the wake lock is not abused.

With reference to the first aspect, in some implementations of the first aspect, requesting the second wake lock for the second standby scenario based on the second event includes:
requesting the second wake lock from the power service through a system service corresponding to the second event in the second standby scenario.

With reference to the first aspect, in some implementations of the first aspect, the system service includes a multimedia service, a push service, a call service, a download service, a sensor service, or a navigation service.

With reference to the first aspect, in some implementations of the first aspect, after entering the standby state, the method further includes:
receiving a third event;
entering a third standby scenario based on the third event, where the third standby scenario is a scenario in which the electronic device in the standby state executes the third event through a third application; and
entering the standby state after a third wake lock corresponding to the third standby scenario is released and the screen is off.

With reference to the first aspect, in some implementations of the first aspect, entering the third standby scenario based on the third event, where the third standby scenario is a scenario in which the electronic device in the standby state executes the third event through the third application, specifically includes:
waking up, based on the third event, a system through hardware corresponding to the third event, and activating a system service corresponding to the third event;
obtaining the third wake lock through requesting from a power service through the system service corresponding to the third event;
waking up the third application corresponding to the third event based on the third wake lock; and
executing the third event through the third application.

With reference to the first aspect, in some implementations of the first aspect, the third standby scenario is characterized by wakeup from hardware.

With reference to the first aspect, in some implementations of the first aspect, the third standby scenario includes a notification scenario or a call scenario.

With reference to the first aspect, in some implementations of the first aspect, the third event is associated with a fourth event.

With reference to the first aspect, in some implementations of the first aspect, after entering the third standby scenario based on the third event, the method further includes:
entering a fourth standby scenario based on the fourth event, where the fourth standby scenario is a scenario in which the electronic device in the standby state executes the fourth event through the third application.

With reference to the first aspect, in some implementations of the first aspect, entering the fourth standby scenario based on the fourth event, where the fourth standby scenario is the scenario in which the electronic device in the standby state executes the fourth event through the third application, specifically includes:
activating a system service corresponding to the fourth event based on the fourth event;
obtaining a fourth wake lock through requesting from the power service through the system service corresponding to the fourth event; and
executing the fourth event through the third application based on the fourth wake lock.

With reference to the first aspect, in some implementations of the first aspect, entering the standby state after the third wake lock corresponding to the third standby scenario is released and the screen is off includes:
entering the standby state after both the third wake lock and the fourth wake lock are released and the screen is off.

With reference to the first aspect, in some implementations of the first aspect, the fourth event is an audio event.

According to a second aspect, an embodiment of the present invention provides an electronic device, including a processor and a memory. The memory is configured to store a computer program, the computer program includes program instructions, and when the processor runs the program instructions, the electronic device is enabled to perform the steps of the foregoing method.

According to a third aspect, an embodiment of the present invention provides a computer-readable storage medium. The computer-readable storage medium stores a computer program, the computer program includes program instructions, and when the program instructionsare run by a computer, the computer is enabled to perform the foregoing method.

According to a fourth aspect, an embodiment of the present invention provides a computer program product. The computer program product includes instructions, and when the computer program product is run on a computer or any one of at least one processor, the computer is enabled to perform the functions/steps in the foregoing method.

In the technical solutions of the standby method and the electronic device provided in embodiments of the present invention, the standby method includes: entering, by an electronic device, a first standby scenario, where the first standby scenario is a scenario in which a first wake lock, when the electronic device executes a first event through a first application, is obtained through requesting based on the first event in response to a screen-off operation of a user; requesting a second wake lock for a second standby scenario based on a second event, where the second standby scenario is a scenario in which the electronic device in a standby state executes the second event through a second application; approving or rejecting a request for the second wake lock based on the first standby scenario, the second standby scenario, and a standby scenario relationship; and entering the standby state after the first wake lock is released and a screen is off, or after both the first wake lock and the second wake lock are released and a screen is off. The wake locks are managed and controlled based on the scenarios, so that the electronic device is controllable and flexible in a scenario of entering the standby state.

### BRIEF DESCRIPTION OF DRAWINGS

FIG. 1 is a diagram of a structure of an electronic device according to an embodiment of the present invention;
FIG. 2 is a block diagram of a software structure of an electronic device 100 according to an embodiment of the present invention;
FIG. 3 is a diagram of a wake lock solution of system power management;
FIG. 4 is a diagram of an architecture of a standby system according to an embodiment of the present invention;
FIG. 5 is a diagram of characteristics of six standby scenarios according to an embodiment of the present invention;
FIG. 6 is a diagram of typical characteristics of six standby scenarios of a wake lock according to an embodiment of the present invention;
FIG. 7 is a diagram of a standby solution of the standby system in FIG. 4;
FIG. 8 is a diagram of a standby solution in an audio scenario according to an embodiment of the present invention;
FIG. 9 is a diagram of a standby solution in a notification scenario according to an embodiment of the present invention;
FIG. 10 is a diagram of a standby solution in a call scenario according to an embodiment of the present invention;
FIG. 11 is a diagram of a standby solution in an exercise scenario according to an embodiment of the present invention;
FIG. 12 is a diagram of a standby solution in a navigation scenario according to an embodiment of the present invention;
FIG. 13 is a diagram of a standby solution in a task scenario according to an embodiment of the present invention;
FIG. 14 is a flowchart of a standby method according to an embodiment of the present invention;
FIG. 15 is a flowchart of another standby method according to an embodiment of the present invention;
FIG. 16 is a specific flowchart of obtaining a first wake lock through requesting based on a first standby scenario according to an embodiment of the present invention;
FIG. 17 is a specific flowchart of entering a third standby scenario based on a third event, where the third standby a scenario in which an electronic device in a standby state executes the third event through a third application, according to an embodiment of the present invention;
FIG. 18 is a specific flowchart of entering a fourth standby scenario based on a fourth event, where the fourth standby a scenario in which an electronic device in a standby state executes the fourth event through a third application, according to an embodiment of the present invention; and
FIG. 19 is a diagram of a structure of an electronic device according to an embodiment of the present invention.

### DESCRIPTION OF EMBODIMENTS

To make technical solutions in the present invention more comprehensible, the following describes embodiments of the present invention in detail with reference to the accompanying drawings.

It should be clear that the described embodiments are merely some rather than all of embodiments of the present invention. All other embodiments obtained by a person of ordinary skill in the art based on embodiments of the present invention without creative efforts shall fall within the protection scope of the present invention.

Terms used in embodiments of the present invention are merely for describing specific embodiments, but are not intended to limit the present invention. The terms "a", "said", and "the" of singular forms used in embodiments and the appended claims of the present invention are also intended to include plural forms, unless otherwise specified in the context clearly.

It should be understood that the term "and/or" used in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

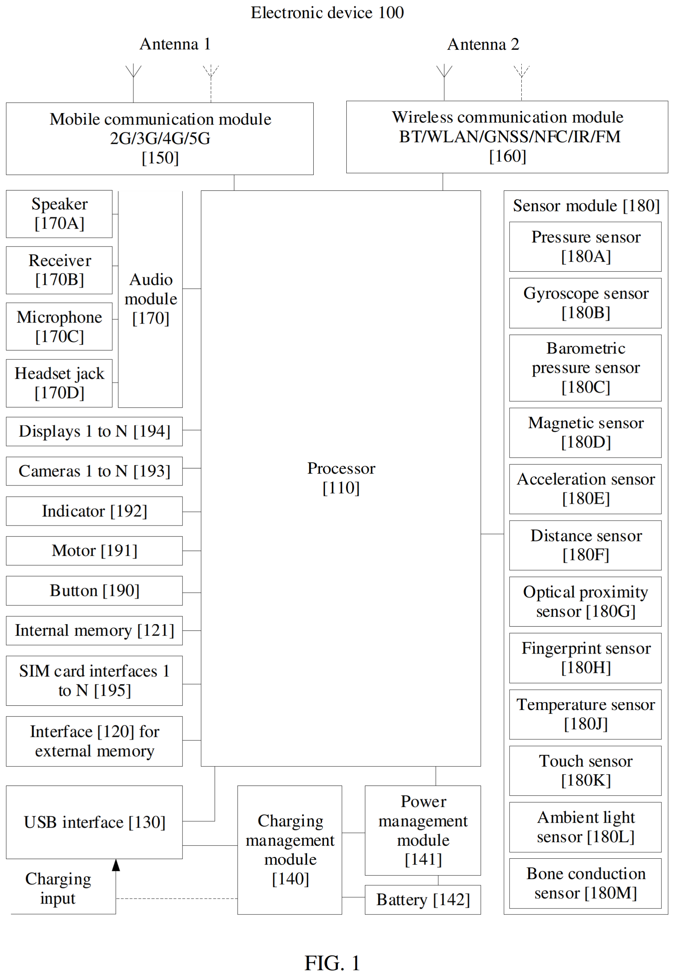

FIG. 1 is a diagram of a structure of an electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory can store instructions or data that has just been used or is cyclically used by the processor 110. If the processor 110 needs to use the instructions or data again, the processor may directly call the instructions or data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to perform data transmission between the electronic device 100 and a peripheral device, or may be configured to connect to a headset for playing audio through the headset. The interface may be further configured to connect to another electronic device, for example, an AR device.

It may be understood that an interface connection relationship between the modules shown in this embodiment of the present invention is merely an example for description, and does not constitute a limitation on a structure of the electronic device 100. In some other embodiments of this application, the electronic device 100 may alternatively adopt an interface connection manner different from that in the foregoing embodiment, or adopt a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as battery capacity, a battery cycle count, and battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution of wireless communication including 2G/3G/4G/5G or the like that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A or the receiver 170B), or displays an image or a video through the display 194. In some embodiments, the modem processor may be an independent component. In some other embodiments, the modem processor may be independent of the processor 110, and is disposed in a same device with the mobile communication module 150 or another functional module.

The wireless communication module 160 may provide a solution of wireless communication that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 is coupled to the mobile communication module 150, and the antenna 2 is coupled to the wireless communication module 160, so that the electronic device 100 can be in communication with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric calculations, and is configured for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back from the camera 193. For example, during photographing, when a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG) 1, MPEG2, MPEG3, and MPEG4.

The NPU is a neural-network (neural-network, NN) computing processor that quickly processes input information with reference to a structure of a biological neural network, for example, a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (such as a sound playing function and an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be disposed in the electronic device 100, to collect a sound signal, implement noise reduction, identify a sound source, and implement a directional recording function.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (such as a time reminder, information receiving, an alarm clock, and a game) may also correspond to different vibration feedback effects. Touch vibration feedback effects may be further customized.

The indicator 192 may be an indicator light, and may be configured to indicate a charging state and a power change, and may also be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of the present invention, an Android system of a layered architecture is used as an example to describe a software structure of the electronic device 100.

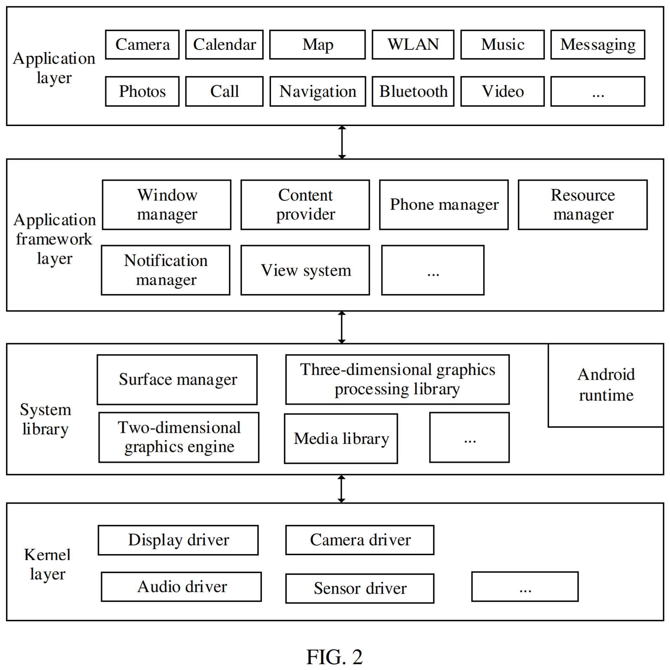

FIG. 2 is a block diagram of a software structure of an electronic device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom.

The application layer may include a series of application packages.

As shown in FIG. 2, the application packages may include applications such as Camera, Photos, Calendar, Call, Map, Navigation, WLAN, Bluetooth, Music, Video, and Messaging.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmark, an address book, and the like.

The view system includes a visual control such as a control for displaying text or a control for displaying an image. The view system may be configured to construct an application. A display interface may include one or more views. For example, a display interface including a short-message notification icon may include a text display view and an image display view.

The phone manager is configured to provide a communication function for the electronic device 100, for example, management of call status (including answered, ended, or the like).

The resource manager provides various resources, such as a localized character string, an icon, an image, a layout file, and a video file, for an application.

The notification manager enables an application to display notification information in a status bar, and may be configured to convey a notification message. The notification message may automatically disappear after a short pause without requiring a user interaction. For example, the notification manager is configured to notify download completion, provide a message notification, and the like. The notification manager may also provide a notification that appears in a status bar at the top of the system in a form of a graph or a text scroll bar, for example, a notification of an application that is run on a background, or may provide a notification that appears on a screen in a form of a dialog window. For example, text information is displayed in the status bar, an alert tone is made, the electronic device vibrates, or the indicator light blinks.

The Android runtime includes a core library and a virtual machine. The Android runtime is responsible for scheduling and management of the Android system.

The core library includes two parts: a functional function that needs to be called in Java language and a core library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in various common audio and video formats, and static image files. The media library may support various audio and video coding formats, such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a capture and photographing scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and recognizes a control corresponding to the input event. An example in which the touch operation is a single-tap operation and a control corresponding to the single-tap operation is a control of a camera application icon is used. The camera application calls an interface of the application framework layer to enable the camera application, then enables the camera driver by calling the kernel layer, and captures a static image or a video through the camera 193.

A common implementation for an electronic device to enter a standby state is controlling whether to enter the standby state by using a CPU wake lock. Implementation of a standby function of iOS is not flexible or open enough. Implementation of a standby function of Android is uncontrollable and is prone to abuse by applications.

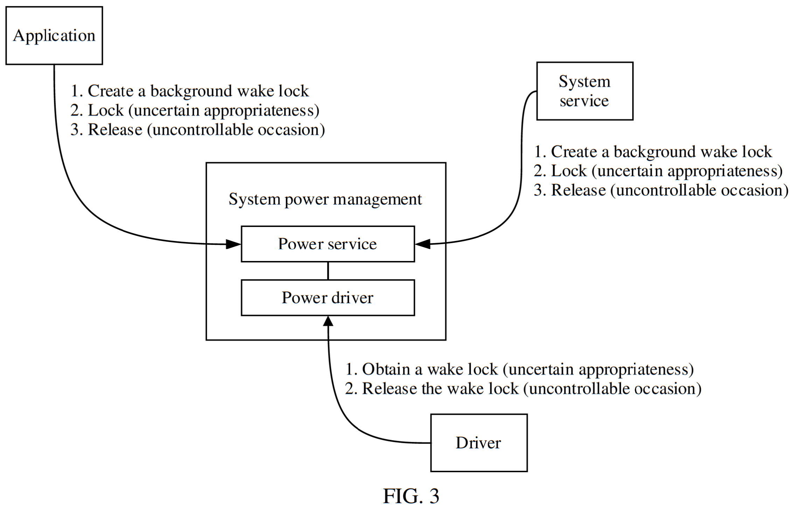

A solution for Android to enter a standby state is used as an example. FIG. 3 is a diagram of a wake lock solution of system power management. As shown in FIG. 3, an electronic device includes system power management, an application, a system service, and a driver. The system power management includes a power service and a power driver. The system power management provides interfaces of background (Background)-type wake locks for the application, the system service, and the driver. When the application, the system service, or the driver needs to process service logic in the background, the application, the system service, or the driver needs to request a background wake lock from the system power management and execute locking (Lock), to prevent the CPU from entering a standby state and ensure normal processing of the service logic. Due to the presence of the background wake lock, the CPU cannot enter the standby state, resulting in excessively high power consumption of the entire device and reduced endurance time. In addition, a release occasion of the wake lock completely depends on the service logic of the application, the system service, and the driver, and the system cannot manage or control the release time. This causes severe abuse, and further results in excessively high power consumption and reduced endurance time.

Based on an open design concept, Android gives full freedom to the application, the system service, and the driver, and allows flexible control by users. Although an application needs to request permission in advance to hold a lock, an application market lacks an effective review means. After the application, the system service, or the driver holds a lock, the system does not enter a standby state unless the application, the system service, or the driver actively releases the lock. Therefore, there is an uncontrollable case in the electronic device at an occasion at which the electronic device enters a standby state, leading to endurance reduction.

In conclusion, there is usually an uncontrollable or inflexible problem in a scenario in which the electronic device enters the standby state.

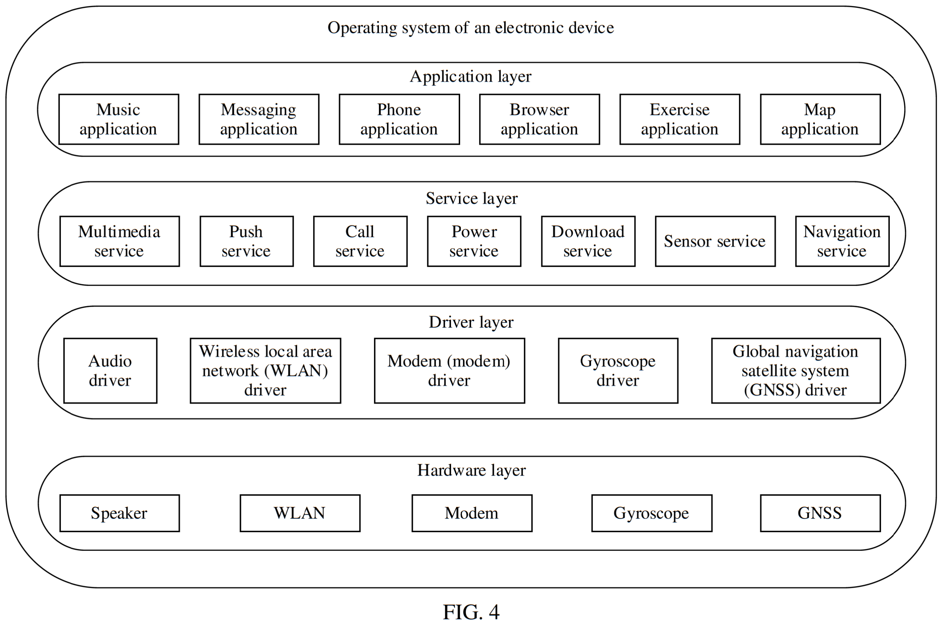

Based on the foregoing technical problems, embodiments of the present invention provide a standby system. FIG. 4 is a diagram of an architecture of a standby system according to an embodiment of the present invention. The standby system is an operating system of the electronic device. As shown in FIG. 4, the standby system includes an application layer, a service layer, a driver layer, and a hardware layer. For a hardware structure and a software structure of the electronic device provided in embodiments of the present invention, refer to related descriptions of the electronic device 100 in FIG. 1 and FIG. 2.

The application layer includes a plurality of applications, and the applications are specific functional modules implemented by application developers, such as a music application, a phone application, and a map application.

The service layer includes a plurality of system services, and the system services are specific function sets implemented by operating system developers, such as a multimedia service, a power service, a call service, and a download service.

The driver layer includes a plurality of drivers, and the drivers are specific hardware functions implemented by device developers, such as an audio driver, a WLAN driver, and a modem driver.

The hardware layer includes a plurality of pieces of hardware, and the hardware is a physical component that provides a specific interaction response, such as a speaker, a WLAN, and a modem.

According to the standard of application classification in an application market, types of applications that perform task processing in a standby case are roughly five types: audio and video entertainment, social communication, utility tools, exercise and health, and travel navigation.

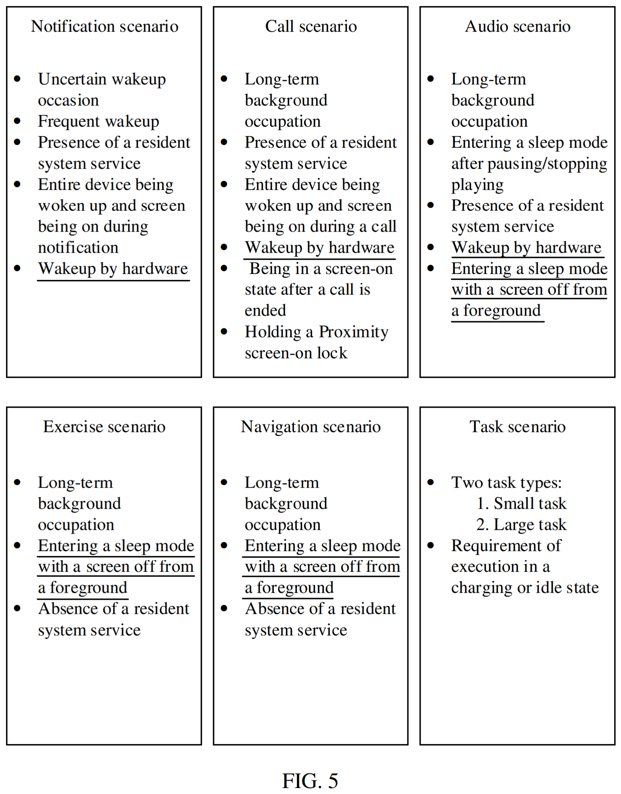

In an embodiment of the present invention, the five types of applications are classified into six standby scenarios, respectively a notification scenario, a call scenario, an audio scenario, an exercise scenario, a navigation scenario, and a task scenario. FIG. 5 is a diagram of characteristics of six standby scenarios according to an embodiment of the present invention.

As shown in FIG. 5, the notification scenario has characteristics of an uncertain wakeup occasion, frequent wakeup, the presence of a resident system service, the entire device being woken up and the screen being on during notification, and wakeup by hardware.

As shown in FIG. 5, the call scenario has characteristics of long-term background occupation, the presence of a resident system service, the entire device being woken up during a call, wakeup by hardware, the device being in a screen-on state after a call is ended, and holding a Proximity screen-on lock.

As shown in FIG. 5, the audio scenario has characteristics of long-term background occupation, entering a sleep mode after pausing/stopping playing, the presence of a resident system service, wakeup by hardware, and entering a sleep mode with a screen off from a foreground.

As shown in FIG. 5, the exercise scenario has characteristics of long-term background occupation, entering a sleep mode with a screen off from a foreground, and the absence of a resident system service.

As shown in FIG. 5, the navigation scenario has characteristics of long-term background occupation, entering a sleep mode with a screen off from a foreground, and the absence of a resident system service.

As shown in FIG. 5, the task scenario has characteristics of two task types (a small task and a large task) and a requirement of execution in a charging or idle state.

In any standby scenario in the foregoing six standby scenarios, what needs to be woken up is a part of a system and hardware of the electronic device, to ensure minimization of a wakeup range, so that unnecessary task execution can be effectively reduced, thereby reducing duration of entering a standby state, reducing power consumption, and improving endurance. Therefore, in an embodiment of the present invention, a wake lock is redesigned based on the six standby scenarios.

When a wake lock for a standby scenario is activated, it is considered that the system of the electronic device has currently entered the standby scenario.

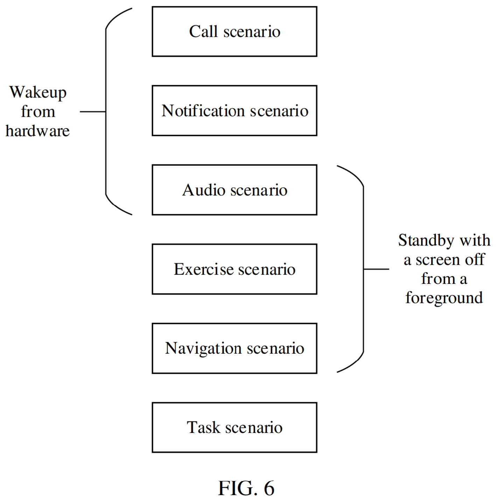

FIG. 6 is a diagram of typical characteristics of six standby scenarios of a wake lock according to an embodiment of the present invention. As shown in FIG. 6, based on the typical characteristics of the six standby scenarios, the standby scenarios may be roughly classified into two categories: "wakeup from hardware" and "standby with a screen off from a foreground".

The "wakeup from hardware" means that, after the electronic device enters a standby state, the hardware actively wakes up the system when receiving a response. For example, when a mobile phone in a standby state receives a call, the mobile phone starts to play a ringtone through Bluetooth.

The "standby with a screen off from a foreground" means that, when a user uses the electronic device in an awake state with the screen on, the user enables the device to enter a screen-off or standby state through a power button or in another manner. For example, when the electronic device provides music, exercise, or navigation through an application, the user presses a power button to turn off the screen of the electronic device.

Therefore, an embodiment of the present invention specifies a standby scenario relationship, that is, a mutual exclusion relationship between standby scenarios includes: mutual exclusion between standby scenarios of standby with a screen off from a foreground. There is a mutual exclusion relationship between standby scenarios in which a standby state can be entered from the foreground. For example, in an exercise scenario, the screen of the electronic device is off, and in this case, a wake lock for an audio scenario cannot be activated. However, the audio scenario and the exercise scenario may coexist (for example, when the electronic device wakes up with the screen on, an exercise application and a music application are started to start exercise and music playing at the same time. In this case, wake locks for both the exercise scenario and the audio scenario are activated).

The standby scenario relationship further includes: mutual exclusion between a task scenario and another standby scenario. A wake lock for a task scenario cannot be activated in any standby scenario. After the electronic device has entered a standby scenario (except for a task scenario), a wake lock for a task scenario cannot be activated. In addition, the electronic device strictly manages and controls execution frequency and duration of the wake lock for the task scenario. Usually, frequent and trivial tasks in the system prevent the electronic device from entering a standby state. In an embodiment of the present invention, the standby scenario relationship of mutual exclusion between a task scenario and another standby scenario is set, so that frequent and trivial tasks in the system can be prevented from preventing the system from entering a standby state.

For example, as shown in FIG. 4, the application layer includes a music application, a messaging application, a phone application, a browser application, an exercise application, and a map application. The music application is configured to provide a music management interface for users, and provide functions, for example, playing and pausing audio. The messaging application is configured to provide functions, for example, receiving, sending, and managing SMS messages. The phone application is configured to provide functions, for example, making and answering voice calls. The browser application is configured to provide functions, for example, web page browsing. The exercise application is configured to provide functions such as step counting and movement tracking. The map application is configured to provide functions such as navigation and route planning.

For example, as shown in FIG. 4, the service layer includes a multimedia service, a push service, a call service, a power service, a download service, a sensor service, and a navigation service. The multimedia service is configured to provide media-related functions such as videos, audio, and photographing. The push service is configured to provide functions, for example, receiving and pushing SMS messages and network messages. The call service is configured to provide functions of making and answering voice calls. The power service is configured to provide functions of system wakeup and standby. The download service is configured to provide functions, for example, downloading and storing network data. The sensor service is configured to provide functions, for example, sensor management and monitoring. The navigation service is configured to provide functions such as positioning and navigation.

For example, as shown in FIG. 4, the driver layer includes an audio driver, a WLAN driver, a modem driver, a gyroscope driver, and a GNSS driver. The audio driver is configured to provide a function of playing audio through a speaker. The WLAN driver is configured to provide functions of networking, and receiving and sending data through a wireless local area network. The modem driver is configured to provide functions of networking, and receiving and sending data through a mobile network. The gyroscope driver is configured to provide functions of gyroscope data detection and reporting. The GNSS driver is configured to provide functions of spatial positioning data detection and reporting.

For example, as shown in FIG. 4, the hardware layer includes a speaker, a WLAN, a modem, a gyroscope, and a GNSS. The speaker is configured to provide a function of playing a sound. The WLAN is configured to provide a function of a wireless local area network. The modem is configured to provide a function of a mobile network. The gyroscope is configured to provide a function of a gyroscope. The GNSS is configured to provide a function of spatial positioning.

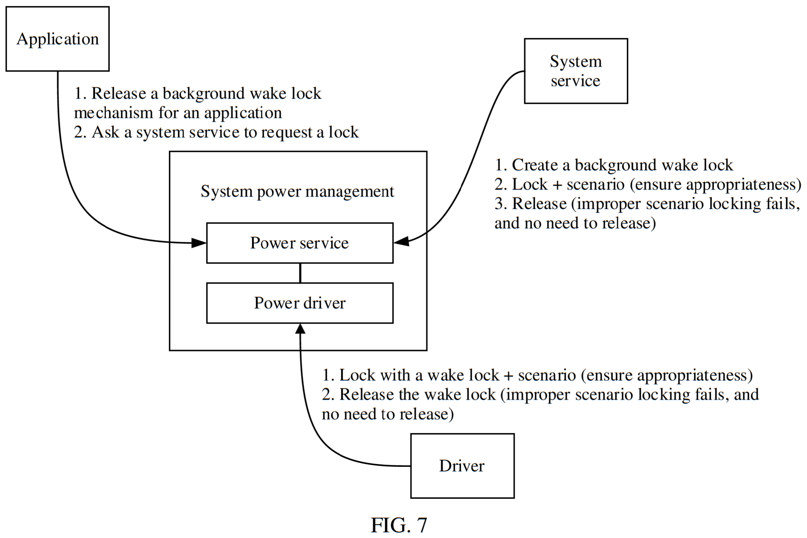

FIG. 7 is a diagram of a standby solution of the standby system in FIG. 4. As shown in FIG. 7, the power service releases a background wake lock provided for an application, and no longer allows direct requesting by the application, preventing a third-party application from abusing the wake lock. Based on a standby scenario of the application, a corresponding system service requests a wake lock corresponding to the standby scenario from the power service, thereby ensuring proper use of the wake lock. When the system service and a driver request wake locks, if a standby scenario relationship is improper, the requests fail, ensuring that the wake lock is not abused.

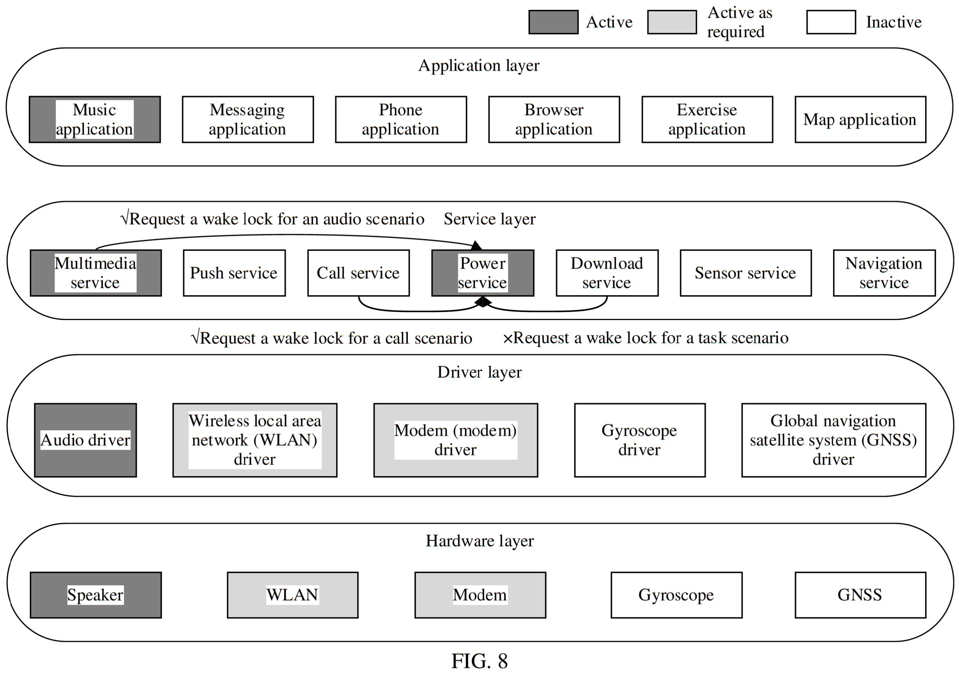

FIG. 8 is a diagram of a standby solution in an audio scenario according to an embodiment of the present invention. As shown in FIG. 8, an electronic device plays music, then a user presses a power button to turn off a screen of the electronic device, and a power service starts to perform standby detection. In this case, a multimedia service requests a wake lock for an audio scenario from the power service, to prevent a system from entering a standby state, and the entire system is in an awake state. A module in an active state needs to occupy hardware resources and consume electricity to perform service processing. In this case, if a call service receives an incoming call event, the pass service requests a wake lock for a call scenario from the power service. Based on the standby scenario relationship, the audio scenario and the call scenario are not mutually exclusive. The request for the wake lock for the call scenario is approved, and a phone application is activated. In another case, as shown in FIG. 8, if a download service receives a background download event, the download service requests a wake lock for a task scenario from the power service. The task scenario and other standby scenarios are mutually exclusive. Therefore, the request for the wake lock for the task scenario is rejected. After the wake locks for the call scenario and the audio scenario are both released and the screen is off, the electronic device enters a standby state. As shown in FIG. 8, in an offline audio scenario, the electronic device needs to keep dark gray parts in an awake state and white parts in an inactive state. In an online audio scenario, the electronic device wakes up light gray parts as required.

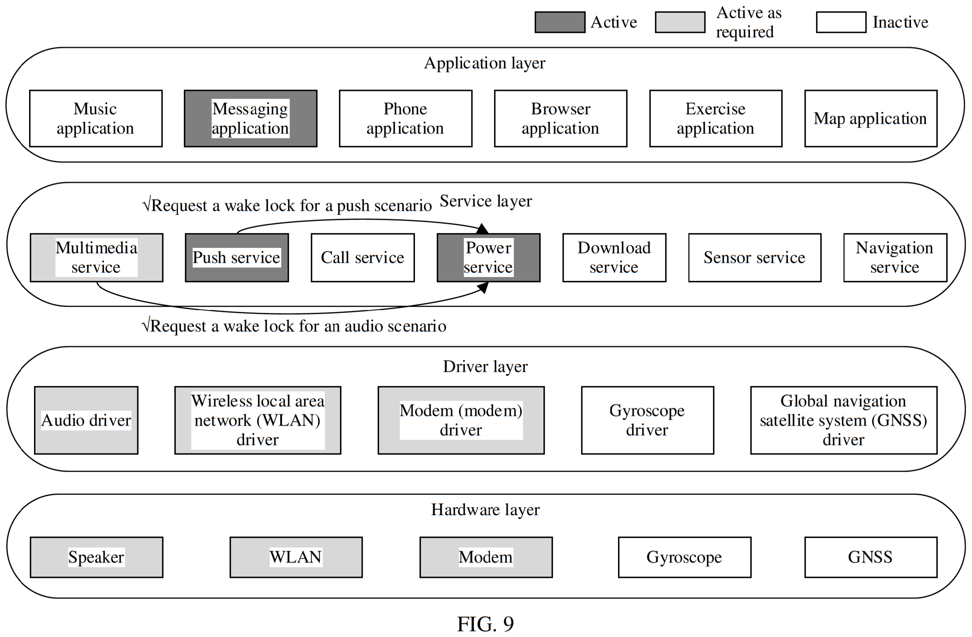

FIG. 9 is a diagram of a standby solution in a notification scenario according to an embodiment of the present invention. As shown in FIG. 9, an electronic device has entered a standby state. In this case, when an SMS message notification is received, a system is woken up through hardware. After the system wakes up, a push service is activated based on the SMS message notification, and the push service obtains a wake lock for a notification scenario through requesting from a power service. A messaging application is woken up based on the wake lock for the notification scenario, a screen turns on, and the SMS message notification is displayed. If an alert tone of the SMS message notification needs to be played, a multimedia service needs to be activated, and the multimedia service requests a wake lock for an audio scenario from the power service. After the notification is completed, the push service releases the wake lock. If a user does not perform any operation, the screen turns off, and then the system enters a standby state. As shown in FIG. 9, in the notification scenario, the system needs to keep dark gray parts in an active state, activate a WLAN or a modem as required based on a network channel, and keep white parts in an inactive state. If an alert tone needs to be played, the multimedia service, an audio driver, and a speaker are woken up as required.

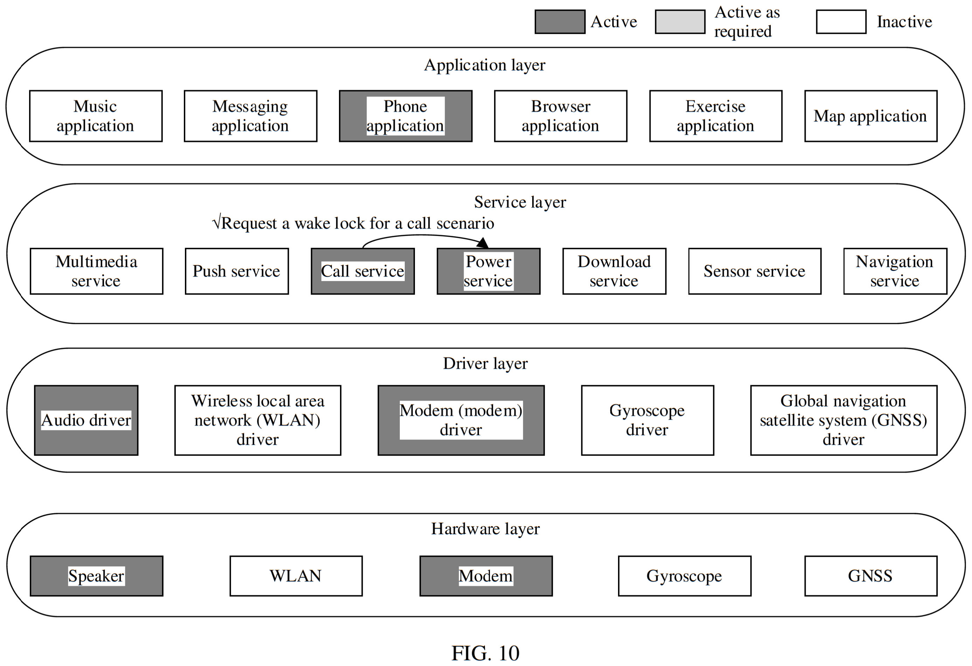

FIG. 10 is a diagram of a standby solution in a call scenario according to an embodiment of the present invention. As shown in FIG. 10, an electronic device has entered a standby state. In this case, when a call comes in, a system is woken up through hardware. After the system wakes up, a call service is activated based on a call event, and the call service requests a wake lock for a call scenario from a power service. Then, a phone application is woken up based on the wake lock for the call service, a screen turns on, and an incoming call notification is displayed. If an incoming call ringtone needs to be played at the same time, a multimedia service needs to be activated, and the multimedia service requests a wake lock for an audio scenario from the power service. After the call is ended, the call service releases the wake lock. If a user does not perform any operation, the screen turns off, and then the system enters a standby state. As shown in FIG. 10, in the call scenario, the system needs to keep dark gray parts in an active state and white parts in an inactive state.

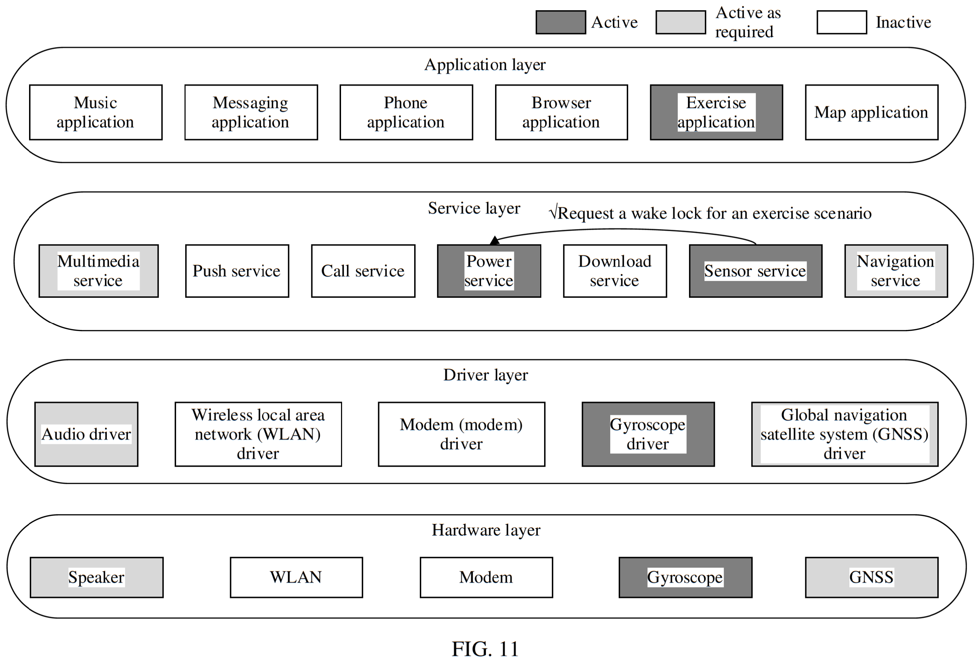

FIG. 11 is a diagram of a standby solution in an exercise scenario according to an embodiment of the present invention. As shown in FIG. 11, an electronic device in an awake state with a screen on enables an exercise state through an exercise application, and then the screen is turned off. After the electronic device enables the exercise state, a sensor service requests a wake lock for an exercise scenario from a power service, and the wake lock for the exercise scenario prevents a system from entering a standby state, thereby ensuring normal reporting of gyroscope data and the like. If an exercise state broadcast or track navigation needs to be performed, a multimedia service and a navigation service need to be activated. After the exercise is completed, the sensor service releases the wake lock. If a user does not perform any operation, the screen turns off, and then the system enters a standby state. As shown in FIG. 11, in the exercise scenario, the system needs to keep dark gray parts in an active state and white parts in an inactive state. If the track and broadcast are required, light gray parts are woken up as required.

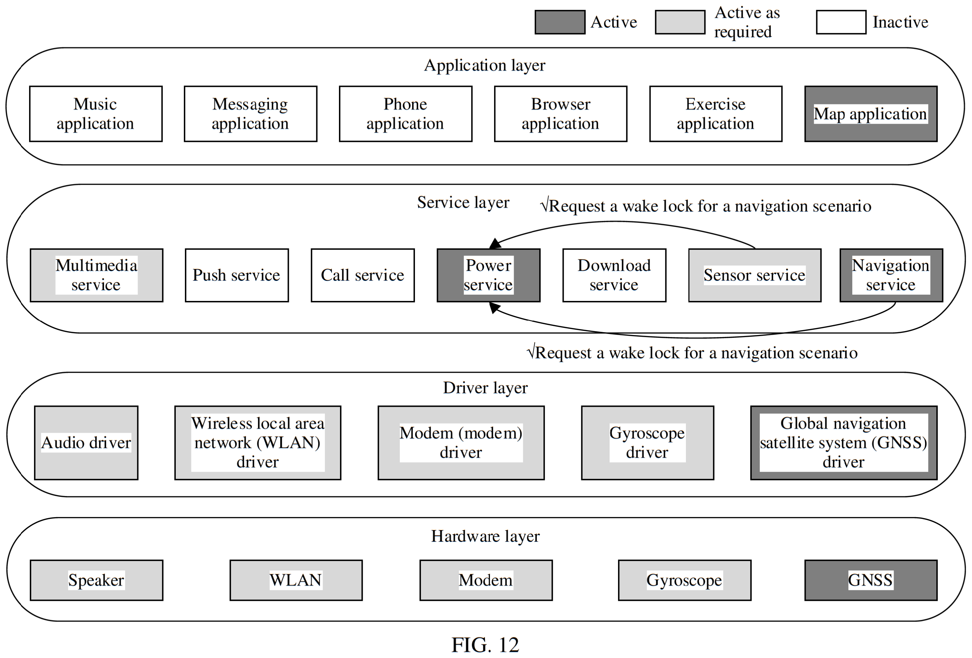

FIG. 12 is a diagram of a standby solution in a navigation scenario according to an embodiment of the present invention. As shown in FIG. 12, an electronic device in an awake state with a screen on enables a navigation state through a navigation application, and then the screen is turned off. After the electronic device enables the navigation state, a navigation service requests a wake lock for a navigation scenario from a power service, and the wake lock prevents a system from entering a standby state, thereby ensuring normal reporting of GNSS data. If a navigation route broadcast or direction identification needs to be performed, a multimedia service and a sensor service need to be activated. After the navigation is completed, the sensor service releases the wake lock. If a user does not perform any operation, the screen turns off, and then the system enters a standby state. As shown in FIG. 12, in the navigation scenario, the system needs to keep dark gray parts in an awake state and white parts in an inactive state. If a direction, a broadcast, and networking are required, light gray parts are woken up as required.

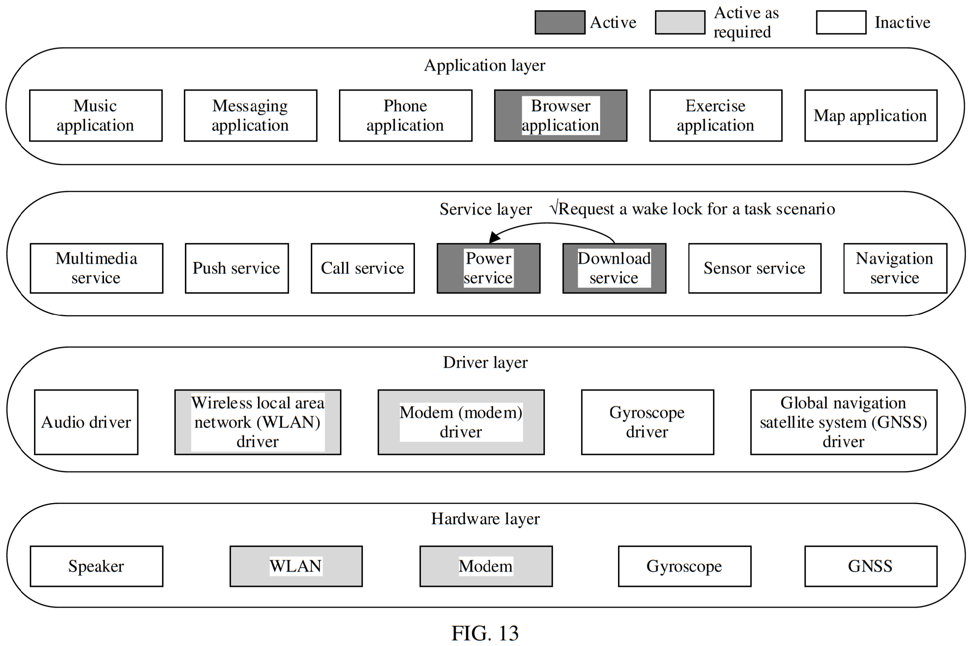

FIG. 13 is a diagram of a standby solution in a task scenario according to an embodiment of the present invention. As shown in FIG. 13, an electronic device in an awake state with a screen on enables a download state through a browser application, and then the screen is turned off. After the electronic device enables the download state, a download service requests a wake lock for a task scenario from a power service, and the wake lock prevents a system from entering a standby state, thereby ensuring that a download task continues. After the download task is completed, the download service releases the wake lock. If a user does not perform an operation, the screen turns off, and then the system enters a standby state. As shown in FIG. 13, in the task scenario, the system needs to keep dark parts in an awake state, wake up a WLAN or a modem as required based on a network channel, and keep white parts in an inactive state. In addition, for the task scenario, the system needs to determine priority of tasks based on execution duration of the tasks to make unified scheduling decisions.

After the system of the electronic device has entered a standby scenario, a wake lock for a task scenario cannot be activated. Frequent and trivial tasks in the system can be effectively managed and controlled to prevent the tasks from preventing the system from entering a standby state, thereby reducing power consumption and improving endurance.

In conclusion, in the wake lock solution of the system power management shown in FIG. 3, the wake lock lacks a design and has only one background type. Application developers improperly use the wake lock, leading to failure for the system to be in a standby state, affecting endurance. System service and driver developers abuse the wake lock, leading to failure to enter a standby state, affecting endurance. In the standby system provided in this application, based on a use scenario of a user, the wake lock is designed based on six standby scenarios and a subsequent extension capability is reserved, so that the wake lock can be managed and controlled based on different scenarios, thereby reducing a risk of abuse. In an embodiment of the present invention, a wake lock used by an application is moved downward to a system service, turning uncontrollability into controllability from a perspective of an operating system. In addition, a scenario in which the system service requests a wake lock is bound to the duty of the service. This is naturally proper and ensures proper use. In an embodiment of the present invention, interfaces of the service layer and the driver layer are unified, and management and control of permission and scenarios are provided. By default, a driver cannot directly use a wake lock, and a permission review needs to be performed by a power module. The permission is granted only when the use is proper, effectively reducing abuse. Therefore, in embodiments of the present invention, wake locks are managed and controlled in a unified manner based on standby scenarios, ensuring both flexibility and controllability.

In the wake lock solution shown in FIG. 3, a single background wakeup type is defined, and there are severe abuse and improper cases. However, in an embodiment of the present invention, background wake locks are managed and controlled in a unified manner through division of a standby scenario. In embodiments of the present invention, the wake locks are managed and controlled based on the scenarios, ensuring appropriateness, thereby improving endurance.

Based on the foregoing architecture of the standby system, embodiments of the present invention provide a standby method. Wake locks are managed and controlled based on scenarios, so that the electronic device is controllable and flexible in a scenario of entering a standby state.

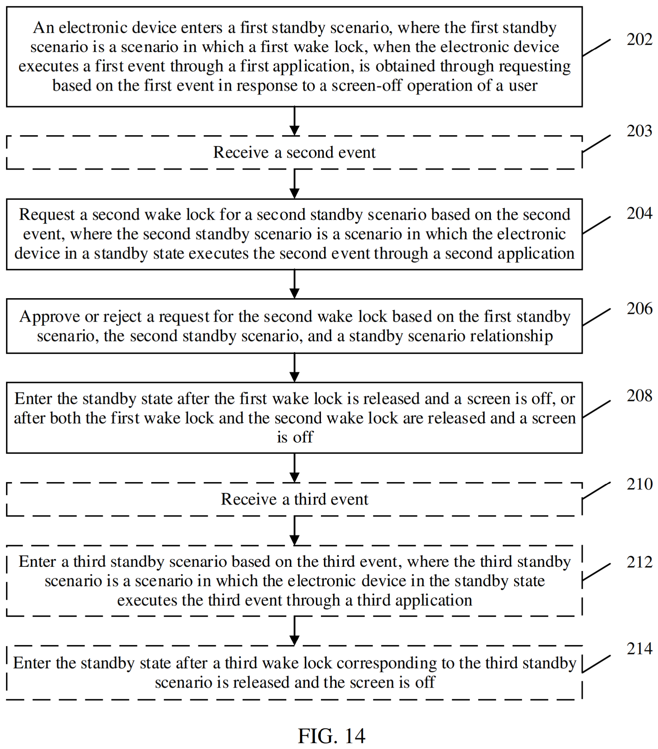

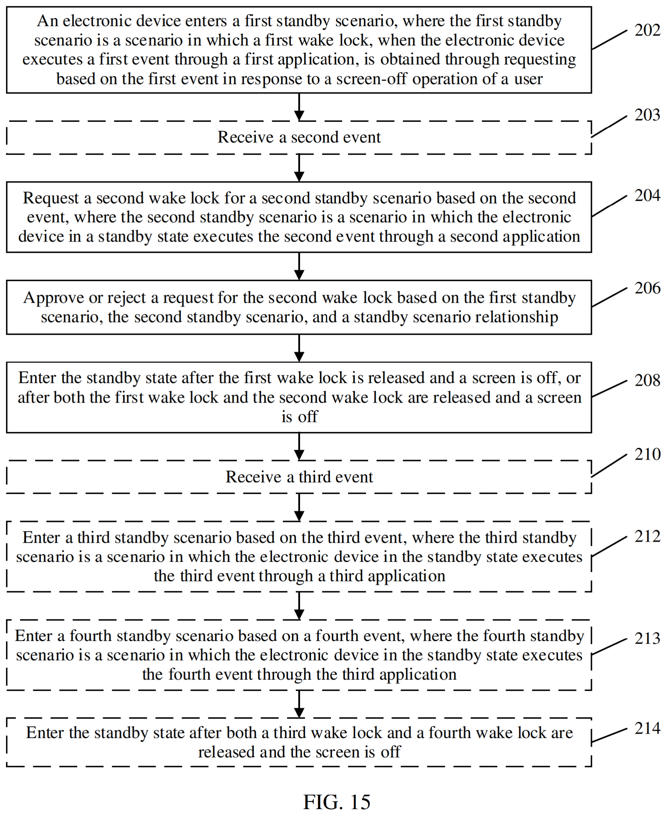

FIG. 14 is a flowchart of a standby method according to an embodiment of the present invention. FIG. 15 is a flowchart of another standby method according to an embodiment of the present invention. As shown in FIG. 14 and FIG. 15, the method includes the following steps.

Step 202: An electronic device enters a first standby scenario, where the first standby scenario is a scenario in which a first wake lock, when the electronic device executes a first event through a first application, is obtained through requesting based on the first event in response to a screen-off operation of a user.

According to the standard of application classification in an application market, types of applications that perform task processing in a standby case are roughly five types: audio and video entertainment, social communication, utility tools, exercise and health, and travel navigation.

In an embodiment of the present invention, the five types of applications are classified into six standby scenarios, respectively a notification scenario, a call scenario, an audio scenario, an exercise scenario, a navigation scenario, and a task scenario.

As shown in FIG. 5, the notification scenario has characteristics of an uncertain wakeup occasion, frequent wakeup, the presence of a resident system service, the entire device being woken up and the screen being on during notification, and wakeup by hardware.

As shown in FIG. 5, the call scenario has characteristics of long-term background occupation, the presence of a resident system service, the entire device being woken up during a call, wakeup by hardware, the device being in a screen-on state after a call is ended, and holding a Proximity screen-on lock.

As shown in FIG. 5, the audio scenario has characteristics of long-term background occupation, entering a sleep mode after pausing/stopping playing, the presence of a resident system service, wakeup by hardware, and entering a sleep mode with a screen off from a foreground.

As shown in FIG. 5, the exercise scenario has characteristics of long-term background occupation, entering a sleep mode with a screen off from a foreground, and the absence of a resident system service.

As shown in FIG. 5, the navigation scenario has characteristics of long-term background occupation, entering a sleep mode with a screen off from a foreground, and the absence of a resident system service.

As shown in FIG. 5, the task scenario has characteristics of two task types (a small task and a large task) and a requirement of execution in a charging or idle state.

In any standby scenario in the foregoing six standby scenarios, what needs to be woken up is a part of a system and hardware of the electronic device, to ensure minimization of a wakeup range, so that unnecessary task execution can be effectively reduced, thereby reducing duration of entering a standby state, reducing power consumption, and improving endurance. Therefore, in an embodiment of the present invention, a wake lock is redesigned based on the six standby scenarios.

When a wake lock for a standby scenario is activated, it is considered that the system of the electronic device has currently entered the standby scenario.

As shown in FIG. 6, based on the typical characteristics of the six standby scenarios, the standby scenarios may be roughly classified into two categories: "wakeup from hardware" and "standby with a screen off from a foreground".

The "standby with a screen off from a foreground" means that, when a user uses the electronic device in an awake state with the screen on, the user enables the device to enter a screen-off or standby state through a power button or in another manner. For example, when the electronic device provides music, exercise, or navigation through an application, the user presses a power button to turn off the screen of the electronic device.

The "wakeup from hardware" means that, after the electronic device enters a standby state, the hardware actively wakes up the system when receiving a response. For example, when a mobile phone in a standby state receives a call, the mobile phone starts to play a ringtone through Bluetooth.

For example, the first standby scenario includes an audio scenario, an exercise scenario, a navigation scenario, or a task scenario.

For example, the first application includes a music application, an exercise application, a map application, or a browser application. The first application corresponds to the first standby scenario.

For example, the first event corresponds to the first standby scenario. For example, if the first standby scenario is an audio scenario, the first event is audio playing; or if the first standby scenario is a task scenario, the first event is a download task.

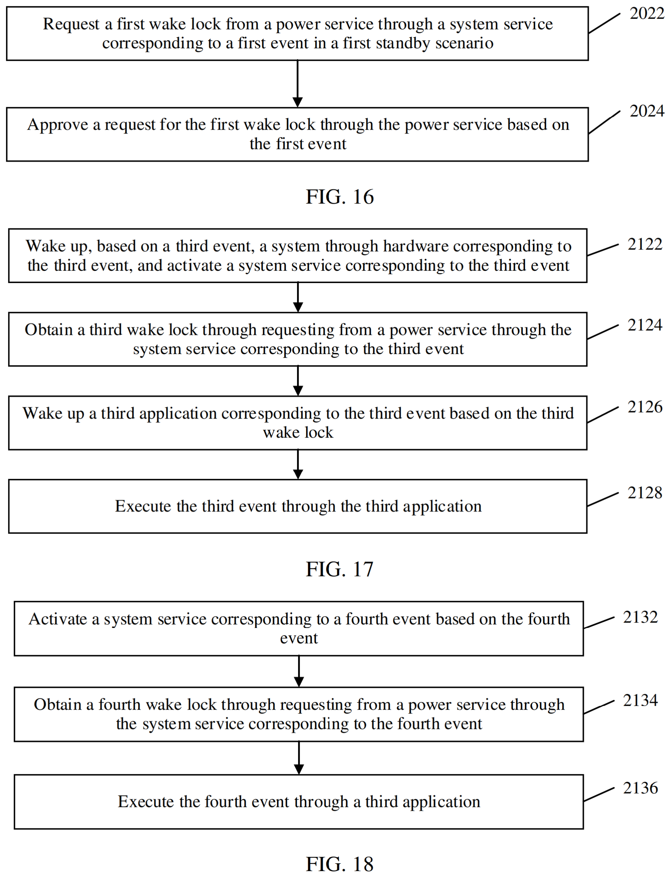

In some possible embodiments, as shown in FIG. 16, that the first wake lock is obtained through requesting based on the first standby scenario specifically includes the following steps.

Step 2022: Request the first wake lock from a power service through a system service corresponding to the first event in the first standby scenario.

For example, the first standby scenario is an audio scenario. The electronic device plays music, then the user presses a power button to turn off the screen of the electronic device, and the power service starts to perform standby detection. As shown in FIG. 8, in this case, the multimedia service requests a wake lock for the audio scenario from the power service.

For example, the first standby scenario is an exercise scenario. The electronic device in an awake state with the screen on enables an exercise state through an exercise application, and then the screen is turned off. As shown in FIG. 11, after the electronic device enables the exercise state, the sensor service requests a wake lock for the exercise scenario from the power service.

For example, the first standby scenario is a navigation scenario. The electronic device in an awake state with the screen on enables a navigation state through a navigation application, and then the screen is turned off. As shown in FIG. 12, after the electronic device enables the navigation state, the navigation service requests a wake lock for the navigation scenario from the power service.

For example, the first standby scenario is a task scenario. As shown in FIG. 13, the electronic device in an awake state with the screen on enables a download state through a browser application, and then the screen is turned off. After the electronic device enables the download state, the download service requests a wake lock for the task scenario from the power service.

For example, the system service includes a multimedia service, a push service, a call service, a download service, a sensor service, or a navigation service.

Step 2024: Approve a request for the first wake lock through the power service based on the first event.

For example, the first standby scenario is an audio scenario. As shown in FIG. 8, after the power service of the electronic device approves the wake lock for the audio scenario, the wake lock prevents the system from entering a standby state, and the entire system is in an awake state. A module in an active state needs to occupy hardware resources and consume electricity to perform service processing.

For example, the first standby scenario is an exercise scenario. As shown in FIG. 11, after the power service of the electronic device approves the wake lock for the exercise scenario, the wake lock for the exercise scenario prevents the system from entering a standby state, thereby ensuring normal reporting of gyroscope data and the like. If an exercise state broadcast or track navigation needs to be performed, the multimedia service and the navigation service need to be activated.

For example, the first standby scenario is a navigation scenario. As shown in FIG. 12, after the power service of the electronic device approves the wake lock for the navigation scenario, the wake lock prevents the system from entering a standby state, thereby ensuring normal reporting of GNSS data. If a navigation route broadcast or direction identification needs to be performed, the multimedia service and the sensor service need to be activated.

For example, the first standby scenario is a task scenario. As shown in FIG. 13, the wake lock prevents the system from entering a standby state, thereby ensuring that the download task continues.

Step 204: Request a second wake lock for a second standby scenario based on a second event, where the second standby scenario is a scenario in which the electronic device in a standby state executes the second event through a second application.

For example, the second standby scenario includes a notification scenario, a call scenario, an audio scenario, an exercise scenario, a navigation scenario, or a task scenario. The first standby scenario and the second standby scenario are different.

For example, the second application includes a messaging application, a phone application, a music application, an exercise application, a map application, or a browser application. The first application and the second application are different. The second application corresponds to the second standby scenario.

In some possible embodiments, step 204 specifically includes: requesting the second wake lock from the power service through a system service corresponding to the second event in the second standby scenario.

Step 206: Approve or reject a request for the second wake lock based on the first standby scenario, the second standby scenario, and a standby scenario relationship.

For example, the standby scenario relationship includes mutual exclusion between a task scenario and a non-task scenario.

For example, the first standby scenario is an audio scenario, and the second standby scenario is a task scenario. As shown in FIG. 8, the electronic device plays music, then the user presses a power button to turn off the screen of the electronic device, and the power service starts to perform standby detection. In this case, the multimedia service requests a wake lock for the audio scenario from the power service, the wake lock prevents the system from entering a standby state, and the entire system is in an awake state. In this case, if a download service receives a background download event, the download service requests a wake lock for a task scenario from the power service. Based on the standby scenario relationship, the task scenario and other standby scenarios are mutually exclusive. Therefore, the request for the wake lock for the task scenario is rejected.

For example, the first standby scenario is an audio scenario, and the second standby scenario is a call scenario. As shown in FIG. 8, the electronic device plays music, then the user presses a power button to turn off the screen of the electronic device, and the power service starts to perform standby detection. In this case, the multimedia service requests a wake lock for the audio scenario from the power service, the wake lock prevents the system from entering a standby state, and the entire system is in an awake state. In this case, if a call service receives an incoming call event, the pass service requests a wake lock for a call scenario from the power service. Based on the standby scenario relationship, the audio scenario and the call scenario are not mutually exclusive. The request for the wake lock for the call scenario is approved, and a phone application is activated.

Therefore, a wake lock for a task scenario cannot be activated in any standby scenario. After the electronic device has entered a standby scenario (except for a task scenario), a wake lock for a task scenario cannot be activated. In addition, the electronic device strictly manages and controls execution frequency and duration of the wake lock for the task scenario. Usually, frequent and trivial tasks in the system prevent the electronic device from entering a standby state. In an embodiment of the present invention, the standby scenario relationship of mutual exclusion between a task scenario and another standby scenario is set, so that frequent and trivial tasks in the system can be prevented from preventing the system from entering a standby state.

In an audio scenario, an exercise scenario, and a navigation scenario, a sleep mode can be entered with a screen off from a foreground. For example, the standby scenario relationship further includes mutual exclusion between scenarios in which a sleep mode is entered with the screen off from a foreground. There is a mutual exclusion relationship between standby scenarios in which a standby state can be entered from the foreground. For example, in an exercise scenario, the screen of the electronic device is off, and in this case, a wake lock for an audio scenario cannot be activated. However, the audio scenario and the exercise scenario may coexist (for example, when the electronic device wakes up with the screen on, an exercise application and a music application are started to start exercise and music playing at the same time. In this case, wake locks for both the exercise scenario and the audio scenario are activated).

Step 208: Enter the standby state after the first wake lock is released and a screen is off, or after both the first wake lock and the second wake lock are released and a screen is off.

Optionally, before step 204, the method further includes the following step.

Step 203: Receive a second event.

For example, when the second event in the second standby scenario is from the outside, before step 204, the electronic device needs to receive the second event, such as an incoming call event or a messaging event.

In some possible embodiments, as shown in FIG. 14, after step 208, the method further includes the following steps.

Step 210: Receive a third event.

Step 212: Enter a third standby scenario based on the third event, where the third standby scenario is a scenario in which the electronic device in the standby state executes the third event through a third application.

For example, the third standby scenario is characterized by wakeup from hardware.

For example, the third standby scenario includes a notification scenario or a call scenario. As shown in FIG. 5 and FIG. 6, both the notification scenario and the call scenario are characterized by wakeup from hardware.

In some possible embodiments, as shown in FIG. 17, step 212 specifically includes the following steps.

Step 2122: Wake up, based on the third event, a system through hardware corresponding to the third event, and activate a system service corresponding to the third event.

For example, the third standby scenario is a notification scenario, and the electronic device has entered a standby state. In this case, when an SMS message notification is received, the system is woken up through hardware. After the system wakes up, a push service is activated based on the SMS message notification.

For example, the third standby scenario is a call scenario, and the electronic device has entered a standby state. In this case, when a call comes in, the system is woken up through hardware. After the system wakes up, a call service is activated based on a call event.

Step 2124: Obtain the third wake lock through requesting from a power service through the system service corresponding to the third event.

For example, the third standby scenario is a notification scenario. As shown in FIG. 9, the push service obtains a wake lock for the notification scenario through requesting from the power service.

For example, the third standby scenario is a call scenario. As shown in FIG. 10, the call service obtains a wake lock for the call scenario through requesting from the power service.

Step 2126: Wake up the third application corresponding to the third event based on the third wake lock.

For example, the third application is a messaging application or a phone application.

For example, the third standby scenario is a notification scenario, and the electronic device wakes up the messaging application and turns on the screen based on a wake lock for the notification scenario.

For example, the third standby scenario is a call scenario, and the electronic device wakes up the phone application and turns on the screen based on a wake lock for a call service.

Step 2128: Execute the third event through the third application.

For example, the third standby scenario is a notification scenario, and a messaging application displays an SMS message notification.

For example, the third standby scenario is a call scenario, and a phone application displays an incoming call notification.

Step 214: Enter the standby state after a third wake lock corresponding to the third standby scenario is released and the screen is off.

In some possible embodiments, the third event is associated with the fourth event. As shown in FIG. 15, after step 212, the method further includes the following step.

Step 213: Enter a fourth standby scenario based on the fourth event, where the fourth standby scenario is a scenario in which the electronic device in the standby state executes the fourth event through the third application.

For example, the fourth event is an audio event. The third standby scenario includes a notification scenario or a call scenario. Because the notification scenario requires the electronic device to play a notification alert tone, and the call scenario requires the electronic device to play an incoming call ringtone, the third event and the fourth event have an association relationship.

In some possible embodiments, as shown in FIG. 18, step 213 specifically includes the following steps.

Step 2132: Activate a system service corresponding to the fourth event based on the fourth event.

For example, the system service corresponding to the fourth event is a multimedia service.

Step 2134: Obtain a fourth wake lock through requesting from the power service through the system service corresponding to the fourth event.

Step 2136: Execute the fourth event through the third application.

In some possible embodiments, the third event is associated with the fourth event. As shown in FIG. 15, step 214 specifically includes: entering the standby state after both the third wake lock and the fourth wake lock are released and the screen is off.

In the technical solutions of the standby method provided in embodiments of the present invention, the standby method includes: entering, by an electronic device, a first standby scenario, where the first standby scenario is a scenario in which a first wake lock, when the electronic device executes a first event through a first application, is obtained through requesting based on the first event in response to a screen-off operation of a user; requesting a second wake lock for a second standby scenario based on a second event, where the second standby scenario is a scenario in which the electronic device in a standby state executes the second event through a second application; approving or rejecting a request for the second wake lock based on the first standby scenario, the second standby scenario, and a standby scenario relationship; and entering the standby state after the first wake lock is released and a screen is off, or after both the first wake lock and the second wake lock are released and a screen is off. The wake locks are managed and controlled based on the scenarios, so that the electronic device is controllable and flexible in a scenario of entering the standby state.

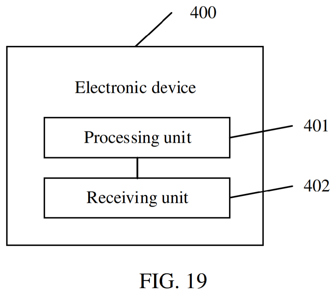

FIG. 19 is a diagram of a structure of an electronic device according to an embodiment of the present invention. It should be understood that the electronic device 400 can perform the steps of the foregoing standby method. To avoid repetition, details are not described herein. The electronic device 400 includes a processing unit 401 and a receiving unit 402.

The processing unit 401 is configured to: enable an electronic device to enter a first standby scenario, where the first standby scenario is a scenario in which a first wake lock, when the electronic device executes a first event through a first application, is obtained through requesting based on the first event in response to a screen-off operation of a user; request a second wake lock for a second standby scenario based on a second event, where the second standby scenario is a scenario in which the electronic device in a standby state executes the second event through a second application; approve or reject a request for the second wake lock based on the first standby scenario, the second standby scenario, and a standby scenario relationship; and enter the standby state after the first wake lock is released and a screen is off, or after both the first wake lock and the second wake lock are released and a screen is off.

Optionally, before the processing unit 401 requests the second wake lock for the second standby scenario based on the second event, the receiving unit 402 is configured to receive the second event.

Optionally, the first standby scenario includes an audio scenario, an exercise scenario, a navigation scenario, or a task scenario.

Optionally, the first application includes a music application, an exercise application, a map application, or a browser application.

Optionally, the second standby scenario includes a notification scenario, a call scenario, an audio scenario, an exercise scenario, or a navigation scenario.

Optionally, the second application includes a messaging application, a phone application, a music application, an exercise application, a map application, or a browser application.

Optionally, the first standby scenario and the second standby scenario are different.

Optionally, the first application and the second application are different.

Optionally, the standby scenario relationship includes mutual exclusion between a task scenario and a non-task scenario.

Optionally, the standby scenario relationship further includes mutual exclusion between standby scenarios in which a sleep mode is entered with the screen off from a foreground.

Optionally, the processing unit 401 is specifically configured to: request the first wake lock from a power service through a system service corresponding to the first event in the first standby scenario; and approve a request for the first wake lock through the power service based on the first event.

Optionally, the processing unit 401 is specifically configured to: request the second wake lock from the power service through a system service corresponding to the second event in the second standby scenario.

Optionally, the system service includes a multimedia service, a push service, a call service, a download service, a sensor service, or a navigation service.

Optionally, after the processing unit 401 enters the standby state, the receiving unit 402 is further configured to receive a third event; and the processing unit 401 is further configured to: enter a third standby scenario based on the third event, where the third standby scenario is a scenario in which the electronic device in the standby state executes the third event through a third application; and enter the standby state after a third wake lock corresponding to the third standby scenario is released and the screen is off.

Optionally, the processing unit 401 is specifically configured to: wake up, based on the third event, a system through hardware corresponding to the third event, and activate a system service corresponding to the third event; obtain the third wake lock through requesting from a power service through the system service corresponding to the third event; wake up the third application corresponding to the third event based on the third wake lock; and execute the third event through the third application.

Optionally, the third standby scenario is characterized by wakeup from hardware.

Optionally, the third standby scenario includes a notification scenario or a call scenario.

Optionally, the third event is associated with a fourth event.

Optionally, after entering the third standby scenario based on the third event, the processing unit 401 is further configured to enter a fourth standby scenario based on the fourth event, where the fourth standby scenario is a scenario in which the electronic device in the standby state executes the fourth event through the third application.

Optionally, the processing unit 401 is specifically configured to: activate a system service corresponding to the fourth event based on the fourth event; obtain a fourth wake lock through requesting from the power service through the system service corresponding to the fourth event; and execute the fourth event through the third application based on the fourth wake lock.

Optionally, the processing unit 401 is specifically configured to enter the standby state after both the third wake lock and the fourth wake lock are released and the screen is off.

Optionally, the fourth event is an audio event.

It should be understood that the electronic device 400 herein is implemented in a form of a functional unit. The term "unit" herein may be implemented in a form of software and/or hardware. This is not specifically limited. For example, the "unit" may be a software program, a hardware circuit, or a combination thereof that implements the foregoing function. The hardware circuit may include an application-specific integrated circuit (application-specific integrated circuit, ASIC), an electronic circuit, a processor (such as a shared processor, a dedicated processor, or a group processor) configured to execute one or more software or firmware programs, a memory, a merged logic circuit, and/or another appropriate component that supports the described function.

Therefore, the units in the examples described in embodiments of the present invention can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

An embodiment of this application provides an electronic device. The electronic device may be a terminal device or a circuit device built into the terminal device. The electronic device may be configured to perform the functions/steps in the foregoing method embodiments.

An embodiment of this application provides a computer-readable storage medium. The computer-readable storage medium stores instructions. When the instructions are run on a terminal device, the terminal device is enabled to perform the functions/steps in the foregoing method embodiments.

An embodiment of this application further provides a computer program product including instructions. When the computer program product is run on a computer or any one of at least one processor, the computer is enabled to perform the functions/steps in the foregoing method embodiments.

In embodiments of this application, "at least one" means one or more, and "plurality of" means two or more. "And/or" describes an association relationship between associated objects and indicates that three relationships may exist. For example, A and/or B may indicate the following cases: Only A exists, both A and B exist, and only B exists. A and B may be singular or plural. The character "/" usually indicates an "or" relationship between the associated objects. "At least one of the following items" and similar expressions mean any combination of these items, including a singular item or any combination of plural items. For example, at least one of a, b, and c may indicate: a, b, c, a-b, a-c, b-c, or a-b-c, where a, b, and c may be singular or plural.

A person of ordinary skill in the art may be aware that the units and algorithm steps described in embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for an electronic device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A standby method, wherein the method comprises:
entering, by an electronic device, a first standby scenario, wherein the first standby scenario is a scenario in which a first wake lock, when the electronic device executes a first event through a first application, is obtained through requesting based on the first event in response to a screen-off operation of a user;
requesting a second wake lock for a second standby scenario based on a second event, wherein the second standby scenario is that the electronic device in a standby state executes the second event through a second application;
approving or rejecting a scenario of a request for the second wake lock based on the first standby scenario, the second standby scenario, and a standby scenario relationship; and
entering the standby state after the first wake lock is released and a screen is off, or after both the first wake lock and the second wake lock are released and a screen is off.

2. The method according to claim 1, wherein before requesting the second wake lock for the second standby scenario based on the second event, the method further comprises:
receiving the second event.

3. The method according to claim 1 or 2, wherein the first standby scenario comprises an audio scenario, an exercise scenario, a navigation scenario, or a task scenario, and the first application comprises a music application, an exercise application, a map application, or a browser application.

4. The method according to any one of claims 1 to 3, wherein the second standby scenario comprises a notification scenario, a call scenario, an audio scenario, an exercise scenario, a navigation scenario, or a task scenario, and the second application comprises a messaging application, a phone application, a music application, an exercise application, a map application, or a browser application.

5. The method according to claim 1, wherein the standby scenario relationship comprises mutual exclusion between a task scenario and a non-task scenario.

6. The method according to claim 5, wherein the standby scenario relationship further comprises mutual exclusion between standby scenarios in which a sleep mode is entered with the screen off from a foreground.

7. The method according to claim 1, wherein that the first wake lock is obtained through requesting based on the first standby scenario comprises:
requesting the first wake lock from a power service through a system service corresponding to the first event in the first standby scenario; and
approving a request for the first wake lock through the power service based on the first event.

8. The method according to claim 1, wherein after entering the standby state, the method further comprises:
receiving a third event;
entering a third standby scenario based on the third event, wherein the third standby scenario is a scenario in which the electronic device in the standby state executes the third event through a third application; and
entering the standby state after a third wake lock corresponding to the third standby scenario is released and the screen is off.

9. The method according to claim 8, wherein entering the third standby scenario based on the third event, wherein the third standby scenario is that the electronic device in the standby state executes the third event through the third application, specifically comprises:
waking up, based on the third event, a system through hardware corresponding to the third event, and activating a system service corresponding to the third event;
obtaining the third wake lock through requesting from a power service through the system service corresponding to the third event;
waking up the third application corresponding to the third event based on the third wake lock; and
executing the third event through the third application.

10. The method according to claim 8 or 9, wherein the third event is associated with a fourth event; and
after entering the third standby scenario based on the third event, the method further comprises:
entering a fourth standby scenario based on the fourth event, wherein the fourth standby scenario is a scenario in which the electronic device in the standby state executes the fourth event through the third application.

11. The method according to claim 10, wherein entering the fourth standby scenario based on the fourth event, wherein the fourth standby scenario is the scenario in which the electronic device in the standby state executes the fourth event through the third application, specifically comprises:
activating a system service corresponding to the fourth event based on the fourth event;
obtaining a fourth wake lock through requesting from the power service through the system service corresponding to the fourth event; and
executing the fourth event through the third application based on the fourth wake lock.

12. The method according to claim 11, wherein entering the standby state after the third wake lock corresponding to the third standby scenario is released and the screen is off comprises:
entering the standby state after both the third wake lock and the fourth wake lock are released and the screen is off.

13. An electronic device, comprising a processor and a memory, wherein the memory is configured to store a computer program, the computer program comprises program instructions, and when the processor runs the program instructions, the electronic device is enabled to perform steps of the method according to any one of claims 1 to 12.

14. A computer-readable storage medium, wherein the computer-readable storage medium stores a computer program, the computer program comprises program instructions, and when the program requests are run by a computer, the computer is enabled to perform the method according to any one of claims 1 to 12.
